(19) Europäisches Patentamt
European Patent Office
Office européen des brevets

(11) **EP 2 474 728 B1**

(12) **EUROPEAN PATENT SPECIFICATION**

(45) Date of publication and mention of the grant of the patent:
**06.05.2015 Bulletin 2015/19**

(21) Application number: **09848970.1**

(22) Date of filing: **02.09.2009**

(51) Int Cl.:
*F02D 41/18* *(2006.01)*   *F02D 41/00* *(2006.01)*

(86) International application number:
**PCT/JP2009/065355**

(87) International publication number:
**WO 2011/027439 (10.03.2011 Gazette 2011/10)**

(54) **EGR CONTROL SYSTEM FOR INTERNAL COMBUSTION ENGINE**

AGR-STEUERSYSTEM FÜR EINEN VERBRENNUNGSMOTOR

SYSTÈME DE COMMANDE DE RECYCLAGE DES GAZ D'ÉCHAPPEMENT D'UN MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.07.2012 Bulletin 2012/28**

(73) Proprietor: **TOYOTA JIDOSHA KABUSHIKI KAISHA**
**Toyota-shi, Aichi-ken, 471-8571 (JP)**

(72) Inventors:
• **KOGO, Tomoyuki**
**Toyota-shi, Aichi-ken, 471-8571 (JP)**
• **OGAWA, Takashi**
**Toyota-shi, Aichi-ken, 471-8571 (JP)**
• **ITO, Katsuhiro**
**Toyota-shi, Aichi-ken, 471-8571 (JP)**
• **IWATA, Kazuyasu**
**Toyota-shi, Aichi-ken, 471-8571 (JP)**

(74) Representative: **TBK**
**Bavariaring 4-6**
**80336 München (DE)**

(56) References cited:
**EP-A1- 1 505 283       WO-A1-2004/027244**
**DE-A1- 19 628 852      JP-A- 2000 303 878**
**JP-A- 2001 012 281     JP-A- 2001 012 281**
**JP-A- 2006 200 396     JP-A- 2006 307 668**
**JP-A- 2008 038 648     JP-A- 2008 175 211**

## Description

The present invention relates to an EGR control system for an internal combustion engine according to the preamble of claim 1, the features of which are known from document DE 196 28 852 A1.

A technique is known in relation to an internal combustion engine provided with an EGR apparatus for recirculating a part of the exhaust gas of the internal combustion engine to an intake system, in which the amount of the EGR gas sucked into the cylinder of the internal combustion engine is calculated on the basis of the volumetric efficiency, and the EGR ratio is controlled to provide a target value on the basis of the calculated EGR gas amount (see, for example, Document JP 2000-220510 A).

The density of the gas sucked into the cylinder is required for the calculation to calculate the EGR gas amount allowed to inflow into the cylinder on the basis of the volumetric efficiency. In the case of the internal combustion engine provided with the EGR apparatus, the gas, which is sucked into the cylinder, is provided by mixing the air and the EGR gas. Therefore, the gas, which is sucked into the cylinder, has the density which is changed depending on the flow rate and the composition of the EGR gas. Therefore, the conventional EGR control, in which the EGR gas amount has been calculated while regarding the density of the gas sucked into the cylinder as a constant, has such a possibility that the EGR control cannot be performed accurately.

The present invention has been made taking the forgoing circumstances into consideration. It is the object of the present invention to improve the control accuracy of the EGR control to be performed on the basis of the volumetric efficiency and the density of the gas sucked into a cylinder. The object of the invention is achieved by an EGR control system according to claim 1. Advantageous embodiments are carried out according to the dependent claims.

In order to solve the problem as described above, according to the present invention, there is provided an EGR control system for an internal combustion engine, comprising:

an EGR apparatus which allows a part of an exhaust gas of the internal combustion engine to inflow as an EGR gas into an intake passage;
EGR gas amount regulating means which regulates a flow rate of the EGR gas allowed to inflow into the intake passage by the EGR apparatus; and
control means which acquires a flow rate of the EGR gas sucked into a cylinder on the basis of a volumetric efficiency of the internal combustion engine and a density of a gas sucked into the cylinder of the internal combustion engine and which controls the EGR gas amount regulating means on the basis of the acquired flow rate of the EGR gas, wherein:

the control means has means for acquiring a composition of the gas sucked into the cylinder so that the density of the gas sucked into the cylinder is acquired on the basis of the acquired composition, and the flow rate of the EGR gas sucked into the cylinder is acquired on the basis of the acquired gas density and the volumetric efficiency.

In the internal combustion engine provided with the EGR apparatus constructed as described above in which the EGR gas is introduced into the intake passage, the density of the gas sucked into the cylinder is changed depending on the flow rate of the EGR gas allowed to inflow into the intake passage and the composition of the EGR gas. Therefore, the density of the gas sucked into the cylinder is not constant. According to the EGR control system of the present invention, it is possible to acquire the composition of the gas sucked into the cylinder, and it is possible to acquire the density of the gas sucked into the cylinder on the basis of the acquired composition. Therefore, the density of the gas sucked into the cylinder, which is fluctuated on account of the introduction of the EGR gas, can be acquired accurately. Further, the flow rate of the gas sucked into the cylinder is acquired on the basis of the volumetric efficiency of the internal combustion engine and the density of the gas sucked into the cylinder as acquired as described above, and the flow rate of the EGR gas sucked into the cylinder is acquired on the basis thereof. Therefore, even when the composition of the gas sucked into the cylinder is changed by the introduction of the EGR gas, it is possible to accurately acquire the flow rate of the EGR gas sucked into the cylinder. Accordingly, it is possible to improve the control accuracy of the EGR control performed on the basis of the volumetric efficiency and the density of the gas sucked into the cylinder.

In the EGR control system constructed as described above, the control means may have means for acquiring an EGR ratio which is a ratio of the flow rate of the EGR gas sucked into the cylinder with respect to a flow rate of the gas sucked into the cylinder, and the composition of the gas sucked into the cylinder may be acquired on the basis of the acquired EGR ratio.

In the internal combustion engine provided with the EGR apparatus in which the EGR gas is introduced into the intake passage, the composition of the gas sucked into the cylinder is changed depending on the EGR ratio of the gas sucked into the cylinder. Therefore, the composition of the gas sucked into the cylinder is acquired on the basis of the EGR ratio, and thus it is possible to accurately acquire the density of the gas sucked into the cylinder. Therefore, it is possible to accurately acquire the flow rate of the gas sucked into the cylinder. Accordingly, it is possible to accurately acquire the flow rate of the EGR gas sucked into the cylinder.

In the EGR control system constructed as described above, the control means may have means for acquiring a composition and a temperature of a burned gas discharged from the internal combustion engine, and the composition of the gas sucked into the cylinder may be acquired on the basis of at least one of the acquired composition and the temperature of the burned gas.

In the internal combustion engine provided with the EGR apparatus in which the EGR gas is introduced into the intake passage, the composition of the gas sucked into the cylinder is changed depending on the composition of the EGR gas contained in the gas sucked into the cylinder. The EGR gas is a part of the burned gas discharged from the internal combustion engine. Therefore, the composition of the EGR gas contained in the gas sucked into the cylinder can be estimated on the basis of the composition and the temperature of the burned gas. Therefore, when the composition of the gas sucked into the cylinder is acquired on the basis of the composition and the temperature of the burned gas, then it is possible to accurately acquire the density of the gas sucked into the cylinder, and hence it is possible to accurately acquire the flow rate of the gas sucked into the cylinder. Accordingly, it is possible to accurately acquire the flow rate of the EGR gas sucked into the cylinder.

In the EGR control system constructed as described above, the control means may acquire the composition and the temperature of the burned gas discharged from the internal combustion engine on the basis of an air-fuel ratio.

The composition and the temperature of the burned gas are changed depending on the combustion condition of the fuel in the internal combustion engine. The air-fuel ratio is the amount which most directly affects the combustion condition of the fuel. When the composition and the temperature of the burned gas are acquired on the basis of the air-fuel ratio, it is possible to accurately acquire the composition and the temperature of the burned gas without depending on the sensing. Therefore, it is possible to accurately acquire the density of the gas sucked into the cylinder. Accordingly, it is possible to accurately acquire the flow rate of the EGR gas sucked into the cylinder.

The EGR control system constructed as described above may further comprise intake air amount acquiring means which acquires an amount of air allowed to inflow into the intake passage, wherein the control means may acquire an amount of the gas sucked into the cylinder on the basis of the volumetric efficiency of the internal combustion engine and the density of the gas sucked into the cylinder of the internal combustion engine, and the flow rate of the EGR gas sucked into the cylinder may be acquired on the basis of a difference between the acquired gas amount and the air amount acquired by the intake air amount acquiring means.

As described above, according to the present invention, even when the density of the gas sucked into the cylinder is fluctuated on account of the introduction of the EGR gas, the flow rate of the gas sucked into the cylinder can be accurately acquired. Therefore, it is possible to accurately acquire the flow rate of the EGR gas on the basis of the calculation in which the air amount is subtracted from the flow rate (flow amount) of the gas sucked into the cylinder.

According to the present invention, it is possible to improve the control accuracy of the EGR control performed on the basis of the volumetric efficiency and the density of the gas sucked into the cylinder.

Fig. 1 shows a schematic arrangement of an internal combustion engine and an intake system and an exhaust system thereof according to an embodiment.

Fig. 2 shows a flow chart of the EGR control according to the embodiment.

Fig. 3 shows a flow chart of the EGR control according to the embodiment.

Fig. 4 shows a relationship between the $CO_2$ concentration in the EGR gas and the ratio of change of the density of the gas sucked into a cylinder, as brought about by the introduction of the EGR gas.

Fig. 5 shows a relationship between the temperature of the EGR gas and the ratio of change of the density of the gas sucked into the cylinder, as brought about by the introduction of the EGR gas.

An embodiment of the present invention will be explained in detail below. It is not intended that the technical scope of the invention is limited, for example, to only the sizes, the materials, the shapes, and the relative arrangements of the constitutive parts or components described in the embodiment of the present invention, unless otherwise specifically stated.

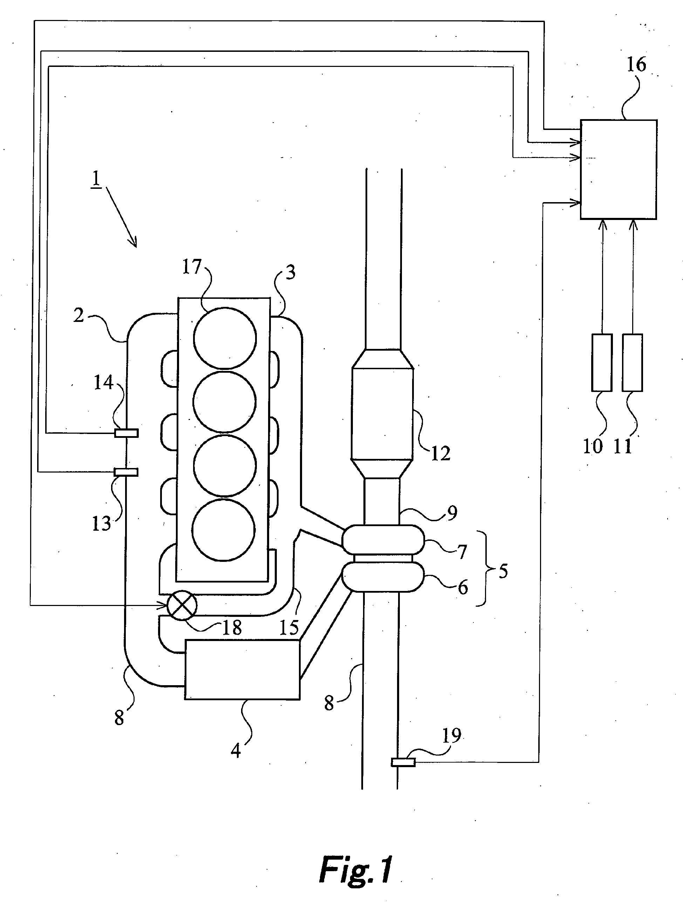

Fig. 1 schematically shows the concept of a schematic arrangement of an internal combustion engine and an intake system and an exhaust system thereof to which an EGR control system for the internal combustion engine according to this embodiment is applied.

The engine 1 is a diesel engine having four cylinders 17. The respective cylinders 17 are communicated with an intake passage 8 via an intake manifold 2. Further, the respective cylinders 17 are communicated with an exhaust passage 9 via an exhaust manifold 3. The engine 1 is provided with a turbo charger 5 which has a compressor 6 provided for the intake passage 8 and a turbine 7 provided for the exhaust passage 9 and which performs the supercharge by utilizing the energy of the exhaust gas.

An inter cooler 4, which cools the supercharged intake gas, is provided for the intake passage 8 on the downstream side from the compressor 6. An air flow meter 19, which measures the amount of air allowed to inflow into the intake passage 8, is provided for the intake passage 8 on the upstream side from the compressor 6.

The exhaust manifold 3 and the intake passage 8 are communicated with each other via an EGR passage 15. A part of the exhaust gas is recirculated to the intake passage 8 via the EGR passage 15. The EGR passage 15 is provided with an EGR valve 18 which regulates the flow rate of the EGR gas as the exhaust gas allowed to inflow into the intake passage 8 via the EGR passage 15. The flow rate of the EGR gas can be regulated by regulating the opening degree of the EGR valve 18. The EGR valve 18 corresponds to the EGR gas amount regulating means according to the present invention.

The intake manifold 2 is provided with an intake pressure sensor 13 which measures the pressure of the gas in the intake manifold 2, and an intake temperature sensor 14 which measures the temperature of the gas in the intake manifold 2.

An exhaust gas purification apparatus 12 is provided for the exhaust passage 9 on the downstream side from the turbine 7. The exhaust gas purification apparatus 12 has a NOx catalyst which absorbs NOx contained in the exhaust gas when the exhaust gas air-fuel ratio is lean and which releases absorbed NOx when the exhaust gas air-fuel ratio becomes rich so that NOx is reduced and purified in the presence of a reducing agent, and a particulate filter which collects the particulate matter contained in the exhaust gas.

The system is provided with ECU 16 which controls the operation state of the engine 1. The measurement data, which is obtained by the intake pressure sensor 13, the intake temperature sensor 14, and the air flow meter 19 as well as an accelerator opening degree sensor 10 for measuring the pedaling amount of an accelerator pedal and a crank angle sensor 11 for measuring the angle of a crank shaft of the engine 1, is inputted into ECU 16. ECU 16 acquires the request of a driver and the operation state of the engine 1 on the basis of the measurement data inputted from the various sensors, and ECU 16 performs, for example, the EGR control as well as the known fuel injection control on the basis thereof.

The EGR control according to this embodiment will now be explained.

In the EGR control of this embodiment, the total gas amount (referred to as "cylinder intake gas amount"), which is sucked into the cylinder 17, is calculated on the basis of the volumetric efficiency of the engine 1 and the density of the gas sucked into the cylinder 17. The air amount, which is measured by the air flow meter 19, is subtracted from the calculated cylinder intake gas amount, and thus the EGR gas amount is calculated. Further, the EGR ratio is calculated on the basis of the calculated EGR gas amount. The opening degree of the EGR valve 18 is subjected to the feedback control so that the EGR ratio is coincident with the target value which is determined depending on the operation condition of the engine 1. In this context, the EGR ratio is the amount which is defined as the ratio of the EGR gas amount with respect to the cylinder intake gas amount. The EGR ratio is the parameter which directly affects the engine performance including, for example, the combustion characteristic, the exhaust characteristic, and the fuel efficiency (mileage) characteristic. The target value is determined depending on the operation state so that the demand, which includes, for example, the regulation of exhaust gas and the request for the fuel efficiency or mileage, is satisfied.

The feature of the EGR control of this embodiment is that the value, which is calculated on the basis of the composition of the cylinder intake gas, is used as the density of the cylinder intake gas to be used for the calculation to calculate the cylinder intake gas amount from the volumetric efficiency and the density of the cylinder intake gas.

Conventionally, the density of the cylinder intake gas is replaced with any constant such as the air density or the like. However, in the case of the internal combustion engine provided with the EGR apparatus in which the EGR gas is introduced into the intake system, the density of the cylinder intake gas is changed depending on the change of the EGR gas amount and the composition of the EGR gas. Therefore, if the density of the cylinder intake gas is approximated by the air density, the cylinder intake gas amount, which is calculated from the volumetric efficiency and the density of the cylinder intake gas, has the low accuracy. Therefore, the EGR gas amount, which is calculated by subtracting the air amount from the cylinder intake gas amount, also has the low accuracy. As a result, there is such a possibility that the control accuracy of the EGR control may be consequently lowered.

In view of the above, in the EGR control system of this embodiment, the density of the cylinder intake gas, which is used for the calculation to calculate the cylinder intake gas amount from the volumetric efficiency and the density of the cylinder intake gas, is calculated every time while considering the EGR gas amount and the composition of the EGR gas. Accordingly, the cylinder intake gas amount can be calculated while reflecting the change of the density of the cylinder intake gas resulting from the introduction of the EGR gas. Therefore, it is also possible to accurately calculate the EGR gas amount sucked into the cylinder. Therefore, it is possible to perform the highly accurate EGR control.

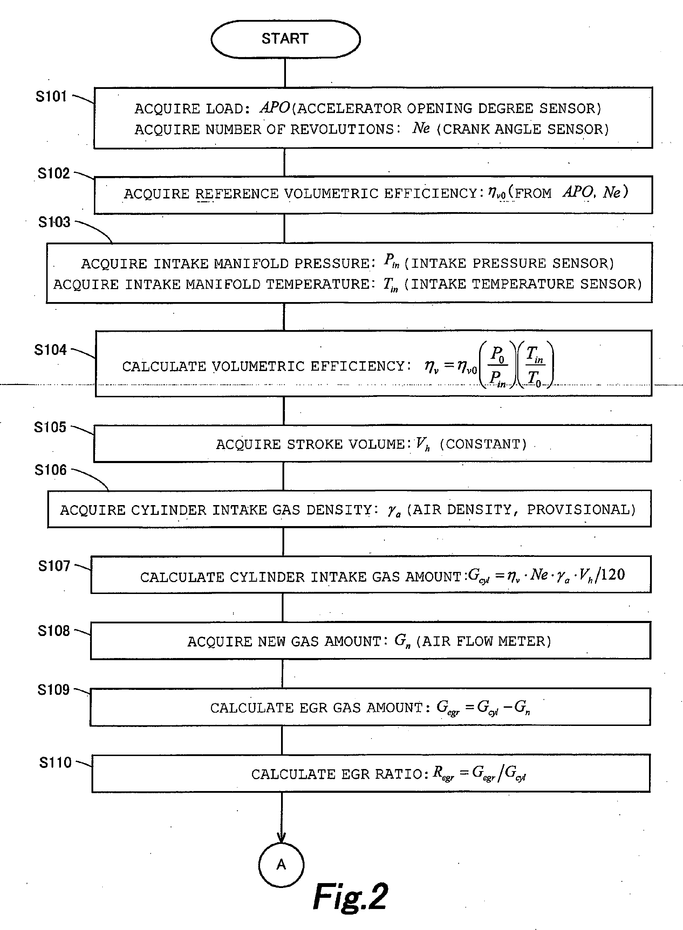

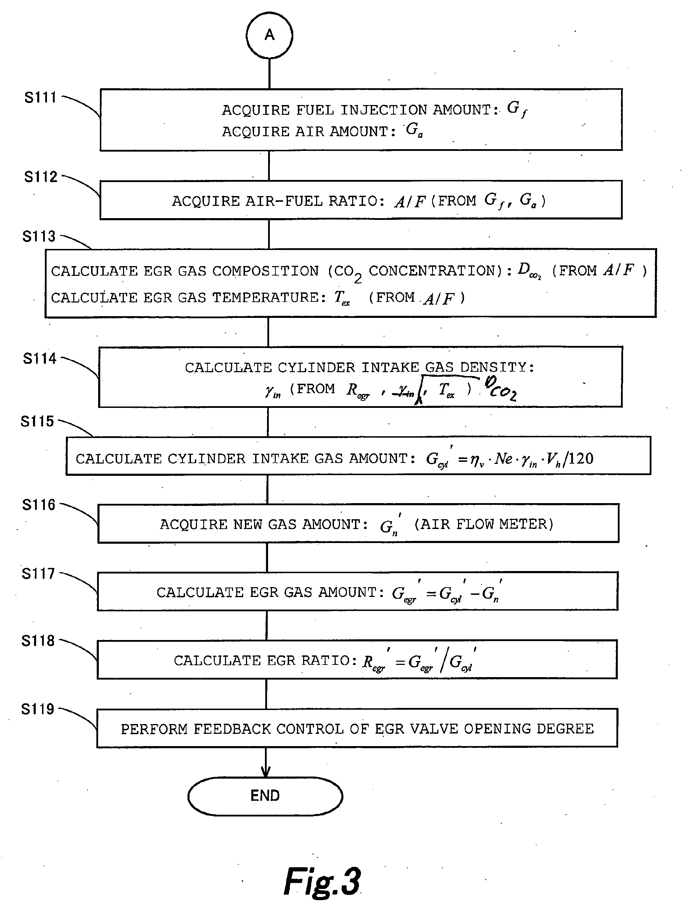

The EGR control of this embodiment will now be explained on the basis of Figs. 2 and 3. Figs. 2 and 3 show flow charts of the EGR control of this embodiment described above. The process, which is represented by the flow charts, is repeatedly executed at predetermined intervals during the operation of the engine 1 by means of ECU 16.

In Step S101, ECU 16 acquires the load and the number of revolutions of the engine 1. In this embodiment, the load APO is acquired on the basis of the measurement data obtained by the accelerator opening degree sensor 10, and the number of revolutions Ne is acquired on the basis of the measurement data obtained by the crank angle sensor 11.

In Step S102, ECU 16 acquires the reference volumetric efficiency $\eta_{v0}$. The reference volumetric efficiency is the volumetric efficiency of the engine 1 provided at a predetermined reference temperature and a reference pressure. The values, which are previously investigated, for example, by means of a test, are mapped and stored in ECU 16 for each of the loads and the numbers of revolutions. ECU 16 retrieves the map by using the load APO and the number of revolutions Ne acquired in Step S101, and thus ECU 16 acquires the reference volumetric efficiency $\eta_{v0}$.

In Step S103, ECU 16 acquires the pressure Pin (hereinafter referred to as "intake manifold pressure") and the temperature $T_{in}$ (hereinafter referred to as "intake manifold temperature") of the gas in the intake manifold 2. In this embodiment, the intake manifold pressure Pin is acquired on the basis of the measurement data obtained by the intake pressure sensor 13, and the intake manifold temperature $T_{in}$ is acquired on the basis of the measurement data obtained by the intake temperature sensor 14.

In Step S104, ECU 16 acquires the present volumetric efficiency $\eta_v$. In this embodiment, the present volumetric efficiency $\eta_v$ is acquired by correcting the reference volumetric efficiency $\eta_{v0}$ acquired in Step S102 by using the intake manifold pressure Pin and the intake manifold temperature $T_{in}$ acquired in Step S103. In this procedure, the volumetric efficiency $\eta_v$ is calculated on the basis of the following expression provided that $P_0$ represents the reference pressure, and To represents the reference temperature.

$$\eta_v = \eta_{v0}\left(\frac{P_0}{P_{in}}\right)\left(\frac{T_{in}}{T_0}\right)$$

In Step S105, ECU 16 acquires the stroke volume $V_h$ of the engine 1. The stroke volume $V_h$ is the constant which is determined depending on the structure of the engine 1.

In Step S106, ECU 16 acquires the density of the cylinder intake gas. In this procedure, the air density $\gamma_a$, which is obtained at the intake manifold pressure $P_{in}$ and the intake manifold temperature $T_{in}$, is provisionally regarded as the density of the cylinder intake gas. As described above, the EGR control of this embodiment has such a feature that the density of the cylinder intake gas is calculated while considering the EGR gas, and the cylinder intake gas amount is calculated from the calculated density of the cylinder intake gas and the volumetric efficiency. However, at this stage, the density of the cylinder intake gas, in which the EGR gas is taken into consideration, is not acquired yet. Therefore, the provisional value is used.

In Step S107, ECU 16 calculates the cylinder intake gas amount $G_{cyl}$. In this embodiment, the cylinder intake gas amount $G_{cyl}$ is calculated in accordance with the following expression by using the volumetric efficiency $\eta_v$ acquired in Step S104, the number of revolutions Ne of the engine 1 acquired in Step S101, the stroke volume $V_h$ acquired in Step S105, and the provisional value $\gamma_a$ of the cylinder intake gas density acquired in Step S106.

$$G_{cyl} = \frac{\eta_v \cdot Ne \cdot \gamma_a \cdot V_h}{120}$$

This expression itself is known, which is obtained as follows. That is, the following expression of definition of the volumetric efficiency is provided.

$$\eta_v = \frac{\text{cylinder intake gas amount } G_{cyl} \text{ per 1 cycle}}{\text{weight } G_h \text{ provided when stroke volume is filled with cylinder intake gas under the same condition as that of intake manifold}}$$

In this expression, the denominator $G_h$ is substituted with the following expression of relation, followed by being solved for $G_{cyl}$.

$$G_h = \frac{\gamma_a \cdot V_h \cdot Ne}{120}$$

In Step S108, ECU 16 acquires the new gas amount $G_n$ allowed to inflow into the intake passage 8. In this embodiment, the new gas amount is acquired on the basis of the measurement data obtained by the air flow meter 19.

In Step S109, ECU 16 acquires the EGR gas amount $G_{egr}$ sucked into the cylinder 17. In this embodiment, the EGR gas amount is acquired by subtracting the new gas amount $G_n$ acquired in Step S108 from the cylinder intake gas amount $G_{cyl}$ acquired in Step S107.

In Step S110, ECU 16 acquires the EGR ratio $R_{egr}$. In this embodiment, the EGR ratio is acquired by calculating the ratio between the EGR gas amount $G_{egr}$ acquired in Step S109 and the cylinder intake gas amount $G_{cyl}$ acquired in Step S107.

The process as described above is such a process that the EGR ratio is calculated in accordance with the method equal to the conventional method by provisionally using the air density as the density of the cylinder intake gas. The feature of this embodiment is as follows. That is, the density of the cylinder intake gas is thereafter calculated again on the basis of the EGR ratio and the composition and the temperature of the EGR gas. The process, which is the same as or equivalent to the process described above, is executed again by using the density, and thus the EGR ratio is calculated again. This process will be explained on the basis of Fig. 3.

In Step S111, ECU 16 acquires the fuel injection amount $G_f$ and the air amount $G_a$. These values are acquired by reading the values used in the fuel injection control routine executed distinctly. The fuel injection control resides in the fuel injection control of any general diesel engine, any detailed explanation of which will be omitted.

In Step S112, ECU 16 acquires the air-fuel ratio A/f. In this embodiment, the air-fuel ratio is acquired from the fuel injection amount $G_f$ and the air amount $G_a$ acquired in Step S111. The air amount, which is referred to herein, is the air amount which finally participates in the combustion and which is different from the new gas amount $G_n$ measured by the air flow meter 19.

In Step S113, ECU 16 acquires the composition and the temperature $T_{ex}$ of the EGR gas. In this embodiment, the carbon dioxide concentration $D_{co2}$ in the burned gas discharged from the engine 1 to the exhaust manifold 3 is calculated on the basis of the air-fuel ratio acquired in Step S112, which is acquired as the composition of the EGR gas. Further, the temperature of the burned gas discharged from the engine 1 to the exhaust manifold 3 is calculated on the basis of the air-fuel ratio acquired in Step S112, which is acquired as the temperature $T_{ex}$ of the EGR gas. An expression, which is experimentally determined, is used as the expression of relation for calculating the temperature of the burned gas from the air-fuel ratio.

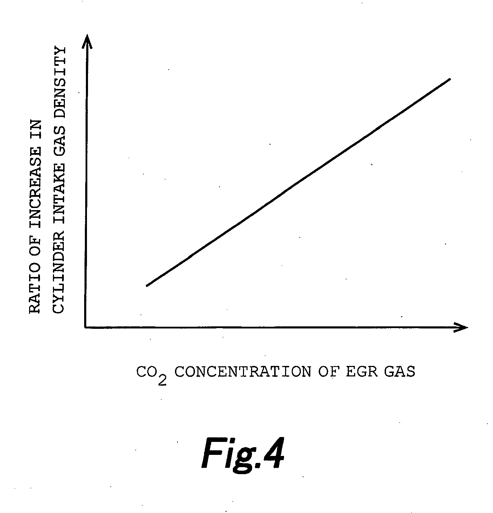

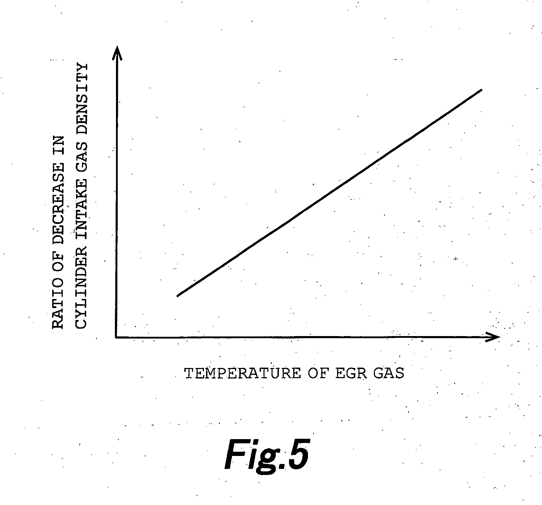

In Step S114, ECU 16 acquires the cylinder intake gas density $\gamma_{in}$. In this embodiment, the cylinder intake gas density $\gamma_{in}$ is calculated on the basis of the carbon dioxide concentration $D_{CO2}$ of the EGR gas and the temperature $T_{ex}$ of the EGR gas acquired in Step S113 and the EGR ratio $R_{egr}$ calculated in Step S110. As shown in Fig. 4, the higher the carbon dioxide concentration $D_{CO2}$ in the EGR gas is, the higher the ratio of change toward the increase in the cylinder intake gas density caused by the introduction of the EGR gas is. On the other hand, as shown in Fig. 5, the higher the temperature $T_{ex}$ of the EGR gas is, the higher the ratio of change toward the decrease in the cylinder intake gas density caused by the introduction of the EGR gas is. The higher the EGR ratio $R_{egr}$ is, the larger the tendency of the change as described above is. In this way, the cylinder intake gas density $\gamma_{in}$, which is provided in the present situation, can be accurately acquired on the basis of the EGR ratio $R_{egr}$, the carbon dioxide concentration $D_{CO2}$ of the EGR gas, and the temperature $T_{ex}$ of the EGR gas.

In the process in Step S115 and the followings, ECU 16 executes the calculation of the EGR ratio explained on the basis of Fig. 2 again by using the cylinder intake gas density $\gamma_{in}$ which takes the EGR ratio into consideration as acquired in Step S114.

At first, in Step S115, ECU 16 calculates the cylinder intake gas amount $G_{cyl}$. In this step, the cylinder intake gas amount $G_{cyl}'$ is calculated in accordance with the following expression by using the volumetric efficiency $\eta_v$ acquired in Step S104, the number of revolutions Ne of the engine 1 acquired in Step S101, the stroke volume $V_h$ acquired in Step S105, and the cylinder intake gas density $\gamma_{in}$ which takes the EGR ratio $R_{egr}$ into consideration as acquired in Step S114.

$$G_{cyl}' = \frac{\eta_v \cdot Ne \cdot \gamma_{in} \cdot V_h}{120}$$

In Step S116, ECU 16 acquires the new gas amount $G_n'$ allowed to inflow into the intake passage 8 on the basis of the measurement data obtained by the air flow meter 19.

In Step S117, ECU 16 acquires the EGR gas amount $G_{egr}'$ sucked into the cylinder 17. In this procedure, the EGR gas amount is acquired by subtracting the new gas amount $G_n'$ acquired in Step S116 from the cylinder intake gas amount $G_{cyl}'$ acquired in Step S115.

In Step S118, ECU 16 acquires the EGR ratio $R_{egr}'$. In this procedure, the EGR ratio is acquired by calculating the ratio between the EGR gas amount $G_{egr}$' acquired in Step S117 and the cylinder intake gas amount $G_{cyl}$' acquired in Step S115.

After that, the opening degree of the EGR valve 18 is subjected to the feedback control on the basis of the comparison between the acquired EGR ratio and the target EGR ratio determined depending on the operation condition (load, number of revolutions) of the engine 1.

When the EGR control is performed in accordance with the flow charts explained above, the calculation, in which the cylinder intake gas amount is calculated from the volumetric efficiency and the density of the cylinder intake gas, is performed twice in the EGR control system of this embodiment. That is, at first, the first time calculation is performed, wherein the air density is provisionally used as the density of the cylinder intake gas. Further, the second time calculation is performed, wherein the density, which is calculated in consideration of the EGR gas temperature and the EGR gas composition distinctly determined from the air-fuel ratio and the EGR ratio obtained as the result of the first time calculation, is used as the density of the cylinder intake gas. When the calculation is performed twice as described above, it is possible to accurately calculate the cylinder intake gas amount even when the density of the cylinder intake gas is changed resulting from the introduction of the EGR gas. The cylinder intake gas amount can be accurately calculated, and thus it is also possible to improve the accuracy of the EGR gas amount calculated by subtracting the air amount from the cylinder intake gas. Accordingly, it is possible to improve the control accuracy of the EGR control performed on the basis of the volumetric efficiency and the density of the cylinder intake gas. In this embodiment, ECU 16, which executes the process of the flow charts explained above, corresponds to the control means according to the present invention.

This embodiment is illustrative of the exemplary case wherein the pressure and the temperature of the gas in the intake manifold 2, which are acquired in Step S103, are acquired by performing the sensing with the intake pressure sensor 13 and the intake temperature sensor 14. However, it is also appropriate to estimate the pressure and the temperature by using a model on the basis of, for example, the operation condition of the engine 1 and the environmental condition of the engine 1.

REFERENCE NUMERALS AND CHARACTERS LIST

1: engine
2: intake manifold
3: exhaust manifold
4: inter cooler
5: turbo charger
6: compressor
7: turbine
8: intake passage
9: exhaust passage
10: accelerator opening degree sensor
11: crank angle sensor
12: exhaust gas purification apparatus
13: intake pressure sensor
14: intake temperature sensor
15: EGR passage
16: ECU
17: cylinder
18: EGR valve
19: air flow meter.

Claims

1. An EGR control system for an internal combustion engine (1), comprising:

an EGR apparatus (15, 18) which allows a part of an exhaust gas of the internal combustion engine to inflow as an EGR gas into an intake passage;
EGR gas amount regulating means (18) which regulates a flow rate of the EGR gas allowed to inflow into the intake passage (8) by the EGR apparatus; and

control means (16) which acquires a flow rate of the EGR gas sucked into a cylinder (17) on the basis of a volumetric efficiency ($\eta_v$) of the internal combustion engine (1) and a density of a gas sucked into the cylinder (17) of the internal combustion engine (1) and which controls the EGR gas amount regulating means (18) on the basis of the acquired flow rate of the EGR gas,

**characterized in that**

the control means (16) has means for acquiring a $CO_2$ concentration ($D_{CO2}$) of the EGR gas and a temperature ($T_{ex}$) of the EGR gas so that the density ($\gamma_{in}$) of the gas sucked into the cylinder (17) is acquired on the basis of the acquired $CO_2$ concentration ($D_{CO2}$) and the temperature ($T_{ex}$) of the EGR gas, and the flow rate of the EGR gas sucked into the cylinder (17) is acquired on the basis of the acquired gas density ($\gamma_{in}$) and the volumetric efficiency ($\eta_v$).

2. The EGR control system for the internal combustion engine (1) according to claim 1, wherein the control means (16) has means for acquiring an EGR ratio which is a ratio of the flow rate of the EGR gas sucked into the cylinder (17) with respect to a flow rate of the gas sucked into the cylinder (17), and the $CO_2$ concentration ($D_{CO2}$) of the gas sucked into the cylinder (17) is acquired on the basis of the acquired EGR ratio.

3. The EGR control system for the internal combustion engine according to claim 1 or 2, wherein the control means (16) acquires a $CO_2$ concentration ($D_{CO2}$) and a temperature ($T_{ex}$) of a burned gas discharged from the internal combustion engine (1), and the $CO_2$ concentration ($D_{CO2}$) of the gas sucked into the cylinder (17) is acquired on the basis of at least one of the acquired $CO_2$ concentration ($D_{CO2}$) and the temperature ($T_{ex}$) of the burned gas.

4. The EGR control system for the internal combustion engine (1) according to claim 3, wherein the control means (16) acquires the $CO_2$ concentration ($D_{CO2}$) and the temperature ($T_{ex}$) of the burned gas discharged from the internal combustion engine (1) on the basis of an air-fuel ratio.

5. The EGR control system for the internal combustion engine (1) according to any one of claims 1 to 4, further comprising intake air amount acquiring means (19) which acquires an amount of air allowed to inflow into the intake passage (8), wherein the control means (16) acquires an amount of the gas sucked into the cylinder (17) on the basis of the volumetric efficiency of the internal combustion engine (1) and the density ($\gamma_{in}$) of the gas sucked into the cylinder (17) of the internal combustion engine (1), and the flow rate of the EGR gas sucked into the cylinder (17) is acquired on the basis of a difference between the acquired gas amount and the air amount ($G_a$) acquired by the intake air amount acquiring means (19).

**Patentansprüche**

1. EGR-Steuersystem für eine Brennkraftmaschine (1), mit:

einer EGR-Vorrichtung (15, 18) die gestattet, dass ein Teil eines Abgases der Brennkraftmaschine als EGR-Gas in einen Einlassdurchtritt einströmt;

einem EGR-Gasmengenregulierungsmittel (18), das eine Strömungsrate des EGR-Gases reguliert, dem es gestattet ist, einen Einlassdurchtritt, (8) durch die EGR-Vorrichtung einzuströmen; und

einem Steuermittel (16) das ausgehend von einem volumetrischen Wirkungsgrad ($\eta_v$) der Brennkraftmaschine (1) und einer Dichte eines in den Zylinder (17) der Brennkraftmaschine (1) gesaugten Gases eine Strömungsrate des in einen Zylinder (17) gesaugten EGR-Gases erlangt und das das EGR-Gasmengenregulierungsmittel (18) ausgehend von der erlangten Strömungsrate des EGR-Gases steuert,

**dadurch gekennzeichnet, dass**

das Steuermittel (16) Mittel zum Erlangen einer $CO_2$ Konzentration ($D_{CO2}$) des EGR-Gases und einer Temperatur ($T_{ex}$) des EGR-Gases aufweist, so dass die Dichte ($\gamma_{in}$) des in den Zylinder (17) gesaugten Gases ausgehend von der erlangten $CO_2$-Konzentration ($D_{CO2}$) und der Temperatur ($T_{ex}$) des EGR-Gases erlangt wird, und die Strömungsrate des in den Zylinder (17) gesaugten EGR-Gases ausgehend von der erlangten Gasdichte ($\gamma_{in}$) und dem volumetrischen Wirkungsgrad ($\eta_v$) erlangt wird.

2. EGR-Steuersystem für eine Brennkraftmaschine (1) nach Anspruch 1, wobei das Steuermittel (16) Mittel zum Erlangen eines EGR-Verhältnisses hat, das ein Verhältnis der Strömungsrate des in Zylinder (17) gesaugten EGR-Gases mit Bezug auf eine Strömungsrate des in den Zylinder (17) gesaugten Gases ist, und die $CO_2$ Konzentration ($D_{CO2}$) des in den Zylinder (17) gesaugten Gases ausgehend von dem erlangten EGR-Verhältnis erlangt wird.

8

**3.** EGR-Steuersystem für eine Brennkraftmaschine nach Anspruch 1 oder 2, wobei das Steuermittel (16) eine $CO_2$-Konzentration ($D_{CO2}$) und eine Temperatur ($T_{ex}$) eines von der Brennkraftmaschine (1) abgegebenen verbrannten Gases erlangt, und die $CO_2$-Konzentration ($D_{CO2}$) des in den Zylinder (17) gesaugten Gases ausgehend von zumindest einem aus der erlangten $CO_2$-Konzentration ($D_{CO2}$) und der Temperatur ($T_{ex}$) des verbrannten Gases erlangt wird.

**4.** EGR-Steuersystem für eine Brennkraftmaschine (1) nach Anspruch 3, wobei das Steuermittel (16) die $CO_2$-Konzentration ($D_{CO2}$) und die Temperatur ($T_{ex}$) des verbrannten Gases, das von der Brennkraftmaschine (1) abgegeben wird ausgehen von einem Luft-Kraftstoff-Verhältnis erlangt.

**5.** EGR-Steuersystem für eine Brennkraftmaschine (1) nach einem der Ansprüche 1 bis 4, außerdem mit einem Einlassluftmengenerlangungsmittel (19), das eine Menge einer Luft erlangt, der gestattet ist, in den Einlassdurchtritt (8) einzuströmen, wobei das Steuermittel (16) eine Menge des in den Zylinder (17) gesaugten Gases ausgehend von dem volumetrischen Wirkungsgrad der Brennkraftmaschine (1) und der Dichte ($\gamma_{in}$) des in den Zylinder (17) der Brennkraftmaschine (1) gesaugten Gases erlangt, und die Strömungsrate des in den Zylinder (17) gesaugten EGR-Gases ausgehend von einem Unterschied zwischen der erlangten Gasmenge und der durch die Einlassluftmengenerlangungsmittel (19) erlangte Luftmenge ($G_a$) erlangt wird.

## Revendications

**1.** Système de commande de la recirculation des gaz d'échappement (EGR) pour un moteur à combustion interne (1), comprenant :

un appareil EGR (15, 18) qui permet à une partie d'un gaz d'échappement du moteur à combustion interne d'entrer en tant que gaz EGR dans un passage d'admission ;
un moyen de régulation de quantité de gaz EGR (18) qui régule un débit du gaz EGR autorisé à entrer dans le passage d'admission (8) par l'appareil EGR ; et
un moyen de commande (16) qui acquiert un débit du gaz EGR aspiré dans un cylindre (17) sur la base d'un rendement volumétrique ($\eta_v$) du moteur à combustion interne (1) et d'une densité d'un gaz aspiré dans le cylindre (17) du moteur à combustion interne (1) et qui commande le moyen de régulation de quantité de gaz EGR (18) sur la base du débit acquis du gaz EGR,
**caractérisé en ce que**
le moyen de commande (16) a un moyen pour l'acquisition d'une concentration en $CO_2$ ($D_{CO2}$) du gaz EGR et d'une température ($T_{ex}$) du gaz EGR de sorte que la densité ($\gamma_{in}$) du gaz aspiré dans le cylindre (17) soit acquise sur la base de la concentration en $CO_2$ ($D_{CO2}$) acquise et de la température ($T_{ex}$) du gaz EGR, et le débit du gaz EGR aspiré dans le cylindre (17) est acquis sur la base de la densité de gaz acquise ($\gamma_{in}$) et du rendement volumétrique ($\eta_v$).

**2.** Système de commande EGR pour le moteur à combustion interne (1) selon la revendication 1, dans lequel le moyen de commande (16) a un moyen pour l'acquisition d'un rapport EGR qui est un rapport du débit du gaz EGR aspiré dans le cylindre (17) par rapport à un débit du gaz aspiré dans le cylindre (17), et la concentration en $CO_2$ ($D_{CO2}$) du gaz aspiré dans le cylindre (17) est acquise sur la base du rapport EGR acquis.

**3.** Système de commande EGR pour le moteur à combustion interne selon la revendication 1 ou 2, dans lequel le moyen de commande (16) acquiert une concentration en $CO_2$ ($D_{CO2}$) et une température ($T_{ex}$) d'un gaz brûlé évacué du moteur à combustion interne (1), et la concentration en $CO_2$ ($D_{CO2}$) du gaz aspiré dans le cylindre (17) est acquise sur la base d'au moins l'une parmi la concentration en $CO_2$ ($D_{CO2}$) acquise et la température ($T_{ex}$) du gaz brûlé.

**4.** Système de commande EGR pour le moteur à combustion interne (1) selon la revendication 3, dans lequel le moyen de commande (16) acquiert la concentration en $CO_2$ ($D_{CO2}$) et la température ($T_{ex}$) du gaz brûlé évacué du moteur à combustion interne (1) sur la base d'un rapport air-carburant.

**5.** Système de commande EGR pour le moteur à combustion interne (1) selon l'une quelconque des revendications 1 à 4, comprenant en outre un moyen d'acquisition de quantité d'air d'admission (19) qui acquiert une quantité d'air autorisé à entrer dans le passage d'admission (8), dans lequel le moyen de commande (16) acquiert une quantité du gaz aspiré dans le cylindre (17) sur la base du rendement volumétrique du moteur à combustion interne (1) et de la densité ($\gamma_{in}$) du gaz aspiré dans le cylindre (17) du moteur à combustion interne (1), et le débit du gaz EGR aspiré dans le cylindre (17) est acquis sur la base d'une différence entre la quantité de gaz acquise et la quantité d'air ($G_a$) acquise par la moyen d'acquisition de quantité d'air d'admission (19).

*Fig.1*

$$\text{START}$$

S101
ACQUIRE LOAD: $APO$ (ACCELERATOR OPENING DEGREE SENSOR)
ACQUIRE NUMBER OF REVOLUTIONS: $Ne$ (CRANK ANGLE SENSOR)

S102
ACQUIRE REFERENCE VOLUMETRIC EFFICIENCY: $\eta_{v0}$ (FROM $APO$, $Ne$)

S103
ACQUIRE INTAKE MANIFOLD PRESSURE: $P_{in}$ (INTAKE PRESSURE SENSOR)
ACQUIRE INTAKE MANIFOLD TEMPERATURE: $T_{in}$ (INTAKE TEMPERATURE SENSOR)

S104
CALCULATE VOLUMETRIC EFFICIENCY: $\eta_v = \eta_{v0}\left(\dfrac{P_0}{P_{in}}\right)\left(\dfrac{T_{in}}{T_0}\right)$

S105
ACQUIRE STROKE VOLUME: $V_h$ (CONSTANT)

S106
ACQUIRE CYLINDER INTAKE GAS DENSITY: $\gamma_a$ (AIR DENSITY, PROVISIONAL)

S107
CALCULATE CYLINDER INTAKE GAS AMOUNT: $G_{cyl} = \eta_v \cdot Ne \cdot \gamma_a \cdot V_h / 120$

S108
ACQUIRE NEW GAS AMOUNT: $G_n$ (AIR FLOW METER)

S109
CALCULATE EGR GAS AMOUNT: $G_{egr} = G_{cyl} - G_n$

S110
CALCULATE EGR RATIO: $R_{egr} = G_{egr} / G_{cyl}$

$$\text{A}$$

## Fig.2

Fig.3

Fig.4

Fig.5

**EP 2 474 728 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19628852 A1
- JP 2000220510 A